# EUROPEAN PATENT SPECIFICATION

(11) **EP 3 936 447 B1**
(45) Date of publication and mention of the grant of the patent: **18.06.2025**
(21) Application number: 20766292.5
(22) Date of filing: 06.02.2020
(51) Int. Cl.: B65D 3/02, B65D 3/20

(54) **PAPER CONTAINER AND METHOD FOR USING SAME**
PAPIERBEHÄLTER UND VERFAHREN ZU SEINER VERWENDUNG
RÉCIPIENT EN PAPIER ET PROCÉDÉ D'UTILISATION

(30) Priority: 06.03.2019 JP 2019041047
(43) Date of publication of application: 12.01.2022
(73) Proprietor: Tokan Kogyo Co., Ltd., Tokyo 141-0022 (JP)
(72) Inventor: MITSUISHI, Takumi, Tokyo 141-0022 (JP)
(74) Representative: Vossius & Partner Patentanwälte Rechtsanwälte mbB
(86) International application number: PCT/JP2020/004641
(87) International publication number: WO 2020/179350

(56) References cited:
- WO-A1-2006/061629
- JP-A- 2003 072 733
- JP-A- 2017 509 557
- JP-S- 1 559 097
- JP-S- 1 559 097
- JP-Y2- H0 231 370
- US-A1- 2012 286 027
- US-A1- 2012 286 027

## Description

### [TECHNICAL FIELD]

The present invention relates to a paper container having a lid function.

### [BACKGROUND ART]

Some of the plastic products cannot be disposed in an appropriate manner, which invites a remote cause of the marine pollution. Recently, the environmental problem is considered and thus such a movement is widely introduced that the major restaurants take on a leadership role in starting disuse of plastic straws.

The beverage container is divided into paper containers and plastic containers. In view of the above-mentioned environmental consideration, the paper containers are used in many cases. Many of the paper containers (main bodies), however, have plastic-made container lids.

In view of the above, every container maker proposes a paper container having a lid function (e.g., Patent Literatures 1 to 3). Such container includes a plurality of flaps provided side by side on the upper edge of a body section, and the flaps overlap each other to cover an opening formed upside of the body section, thereby forming a simple lid. Because such container is made of paper in its entirety, it can be easily disposed. But such a paper container has somewhat a complicated structure with respect to flaps. As a result, assembling thereof is not easy.

The intermediate product of the beverage container is manufactured in a factory, whereas it is a restaurant staff who charges beverage into the container and puts a lid thereon. Therefore, such a container is preferred that the container can be assembled with ease.

With respect to the paper container, the applicant of the present application has tried to manufacture the paper container that can be assembled with ease (Patent Literature 4) (Comparative Example). By the way, Patent Literature 4 is the Publication of Design Application which includes explanation about the appearance of the designed item but does not include much about the technical idea of the same.

### [CITATION LIST]

### [PATENT LITERATURE]

| | |
|---|---|
| [PATENT LITERATURE 1] | JP 4853603 B |
| [PATENT LITERATURE 2] | JP 5282942 B |
| [PATENT LITERATURE 3] | JP 6151772 B |
| [PATENT LITERATURE 4] | D 1559097 A |

US 2012 286 027 A1 discloses another example of a paper container.

### [SUMMARRY OF INVENTION]

### [TECHNICAL PROBLEM]

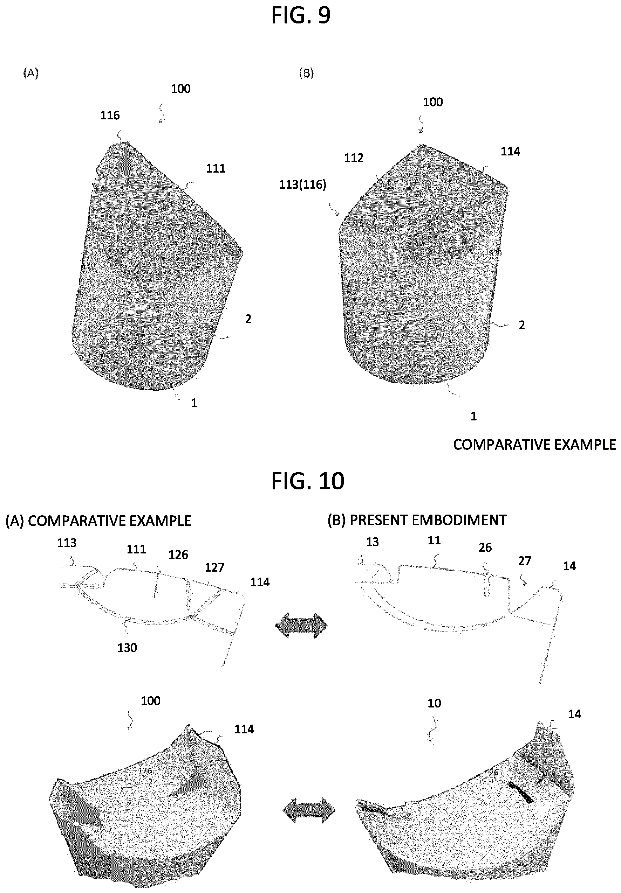

FIG. 9 includes schematic block diagrams illustrating a paper container 100 according to a Comparative Example.

The paper container 100 includes a bottom section 1, a body section 2 provided to stand continuously from the bottom section 1, and a right flap 111, a left flap 112, a collar section 113 and an insertion flap 114 which extend side by side from an upper edge of the body section 2.

Each of the right flap 111 and the left flap 112 is configured to be folded inward along an arc-shaped crease 130 that shares a border with the body section 2. The right and left flaps 111, 112 each includes a slit 126 on the insertion flap side.

The collar section 113 is configured to be folded outward along a crease from the upside of the body section 2 at one end side of the right and left flaps 111, 112.

The insertion flap 114 is configured to be folded inward along a crease from the upside of the body section 2 at the other end side of the right and left flaps 111, 112.

Initially, the collar section 113 is folded outward, and the right flap 111 and the left flap 112 are arranged in such a manner that they overlap each other to cover an opening 3 formed by the body section 2.

Secondary, the insertion flap 114 is inserted into the slit 126. This maintains the flap overlapping state of the right and left flaps 111, 112.

A tap 116 is formed in the collar section 113. At the time, a sharp paper end face is not exposed at a portion where the consumer's lips touch. This makes the consumer keep away from uncomfortable feeling.

As described above, the paper container 100 according to the Comparative Example has a lid function and a simple structure and can be assembled with ease.

The purpose of the present invention is to enhance the convenience of the container by applying improvement to the Comparative Example while maintaining the characteristics of the Comparative Example.

### [SOLUTION TO PROBLEM]

To achieve the above described purpose, the paper container of the present invention includes a bottom section, a body section provided to stand along from the bottom section, a right flap and a left flap formed in such a manner that the flaps are folded inward along creases from the upside of the body section, a collar section formed in such a manner that the collar section is folded outward along a cease from the upside of the body section at one end side of the right and left flaps, and an insertion flap formed in such a manner that the insertion flap is folded inward along a crease from the upside of the body section at the other end side of the right and left flaps. The right flap and the left flap overlap each other to thereby cover an opening formed by the body section. Each of the right flap and the left flap includes a slit on the insertion flap side. The insertion flap is inserted into the slit and maintains the overlapping state of the right and left flaps. Between the body section and each one of the right and left flaps, there are collaterally provided a first arc-shaped crease on the flap side and a second arc-shaped crease on the body section side.

By folding each of the right and left flaps along the first arc-shaped crease, a wide tap is formed. By folding each of the right and left flaps along the second arc-shaped crease, a narrow tap is formed. An appropriate selection of a tap width contributes to the enhancement of the convenience.

More preferably, the second arc-shaped crease is provided at a position where the first arc-shaped crease is rotated by 3-7 degrees with respect to a virtual rotation center in the vicinity of the end of the crease of the insertion flap.

This enables to decrease an adverse effect imposed on the insertion flap side when adjusting the tap width. More specifically, even when the shape is somewhat deformed, the effect imposed on the entire container is negligible.

More preferably, the collar section is provided with a crease corresponding to the first arc-shaped crease and a cease corresponding to the second arc-shaped crease.

With the creases, a tap whose width is selectable is formed in the collar section.

More preferably, the right and left flaps, the collar section, and the insertion flap are formed in such a manner that the outer rims thereof are on the same circular arc in a blank state.

More specifically, the blank has a schematic fan-shape, i.e., a substantially the same shape as the typical body section blank. Therefore, the conventional apparatus and the conventional method can be used.

More preferably, the slit has a width more than the thickness of the insertion flap.

With the structure, an easily insertable and hardly disconnectable insertion structure can be achieved.

More preferably, between the insertion flap and each one of the right and left flaps, a notch is provided.

With the structure, an easily insertable and hardly disconnectable insertion structure can be achieved.

More preferably, the body section has a joining part on the insertion flap side.

With the structure, deformation of the container when holding is suppressed.

To achieve the above-described purpose, in a method for using the paper container of the present invention, it is optionable if a wide tap is to be formed by folding along the first arc-shaped creases or if a narrow tap is to be formed by folding along the second arc-shaped creases.

### [ADVANTAGEOUS EFFECT OF INVENTION]

The present invention has a lid function and a simple structure, which realizes easy assembling.

The present invention allows a selection between a wide tap and a narrow tap. When selecting a narrow tap, one can drink, e.g., a hot drink, sparely. The lid function (closing performance) also improves. When selecting a wide tap, one can drink, e.g., a cold drink, in one gulp. The selection can be readily made by a restaurant staff or a consumer. This enhances the convenience.

### [BRIEF DESCRIPTION OF DRAWINGS]

FIG. 1 includes schematic block diagrams each illustrating a paper container according to an Embodiment of the present invention.
FIG. 2 is a developed blank of a body section, etc.
FIG. 3 illustrates an action of folding flaps.
FIG. 4 illustrates a detailed structure of arc-shaped creases.
FIG. 5 illustrates a basic action when using.
FIG. 6 is a Modification Example when using.
FIG. 7 illustrates a Modification Example of arc-shaped creases.
FIG. 8 illustrates a Modification Example of arc-shaped creases.
FIG. 9 includes schematic block diagrams each illustrating a paper container according to a Comparative Example.
FIG. 10 includes views comparing a detailed structure between the Comparative Example and the present Embodiment.
FIG. 11 illustrates an effect produced by a body section joint part.
FIG. 12 is a Modification Example of the body section joint part.
FIG. 13 is an Example of blank alignment.

### [Description of Embodiment]

### ~Basic Shape~

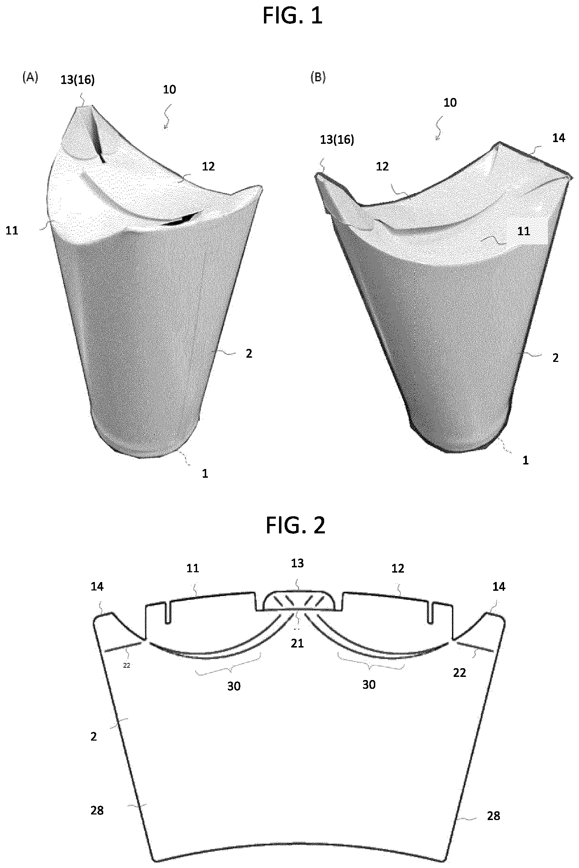

A structure of the present Embodiment will be described below. FIG. 1 includes schematic block diagrams each illustrating a paper container 10 according to the present Embodiment. FIG. 1A is a perspective view when seeing diagonally from the back side, and FIG. 1B is a perspective view when seeing diagonally from the front side.

The paper container 10 includes a bottom section 1, a body section 2 provided to stand along from the bottom section 1 in such a manner that the body section 2 comes to be an inverted truncated cone shape, and a right flap 11, a left flap 12, a collar section 13 and an insertion flap 14 which are provided side by side on the upper edge of the body section 2.

In the illustrated example, the bottom section 1 has a circular-shape but may have a square-shape with the corners chamfered. Alternatively, the bottom section 1 may have a polygonal shape.

The right flap 11 and the left flap 12 overlap each other to cover an opening 3 formed by the body section 2. This structure provides a lid function.

Each of the right and left flaps 11, 12 has a slit 26 on the insertion flap side. The insertion flap 14 is inserted into the slit 26 to maintain the overlapping state of the right and left flaps 11, 12.

In the collar section 13, a tap 16 is formed.

### ~Assembling~

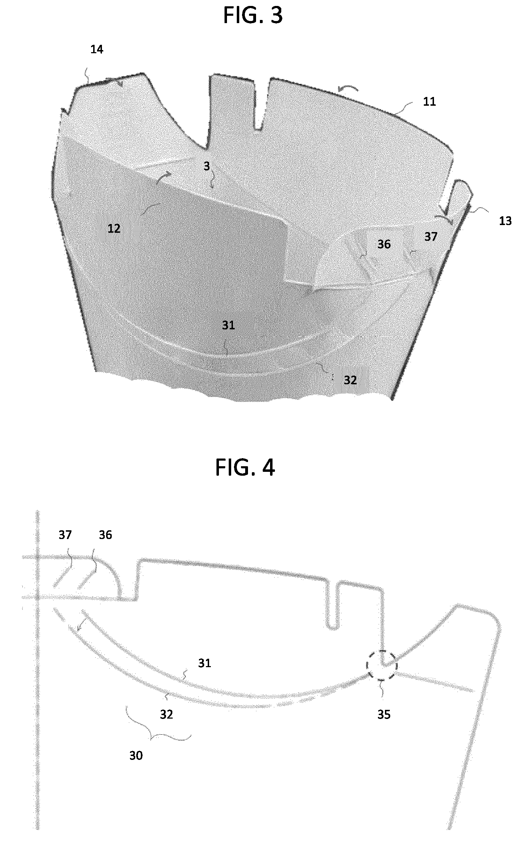

FIG. 2 illustrates a developed blank of, for example, a body section. FIG. 3 illustrates an action of folding the flaps (folding directions of the flaps).

The body section 2 and the flaps 11-14 are formed into a single fan-shaped blank. The flaps 11-14 extend from the upper edge of the fan-shape of the body section 2. In the fan-shaped blank of the illustrated example, arranged in the order from the right are the half of the insertion flap 14, the left flap 12, the collar section 13, the right flap 11, and another half of the insertion flap 14. The outer rims of the flaps 11-14 correspond to the outer circumference of the fan-shape, i.e., are formed in such a manner that the outer rims are on the same circular arc.

The flat blank is rolled up, and the end parts thereof are arranged in such a manner that the end parts overlap each other and are joined together. The flat blank is formed into an inverted truncated cone-shape, resulting in being formed into the body section 2. The bottom section 1 is formed separately and, after the formation of the body section 2, is joined to a lower part of the body section. The collar section 13 is formed between one end sides of the right and left flaps 11, 12. The insertion flap 14 is formed on the other end sides of the right and left flaps 11, 12.

Initially, the collar section 13 is folded outward along a crease 21 from the upside of the body section 2. Then, each of the right flap 11 and the left flap 12 is folded inward along an arc-shaped crease 30 (will be described below in detail). With the structure, the right flap 11 and the left flap 12 overlap each other to cover the opening 3 formed by the body section 2. At the time, a slit 26 is provided in each one of the right and left flaps 11, 12 at the insertion flap side.

Further, the insertion flap 14 is folded inward along a crease 22 from the upside of the body section 2 and is inserted into the slit 26. With the structure, the overlapping state of the right and left flaps 11, 12 is maintained.

Together with the folding of the right and left flaps 11, 12, the collar section 13 is also folded into a channel-shape to form a tap 16. At the time, a portion where the consumer's lips touch is the crease 21, i.e., a sharp paper end face is not exposed. Therefore, the consumer is free from the inconvenient feeling.

As described above, the paper container 10 according to the present Embodiment has a simple structure and thus is easy to assemble.

### ~Characteristic Structure 1~

FIG. 4 illustrates a detailed structure of an arc-shaped crease 30.

The arc-shaped crease 30 includes collaterally a first arc-shaped crease 31 on the flap side (upper line in FIG. 4) and a second arc-shaped crease 32 on the body section side (lower line in FIG. 4) collaterally. The same structure is applied to the left flap side.

In the vicinity of the end part of the crease 22 of the insertion flap 14, more specifically, at a position where the extension line of the crease 22 of the insertion flap 14 and the extension line of the first arc-shaped crease 31 cross, there is provided a virtual rotation center 35.

The second arc-shaped crease 32 is provided at a position where the first arc-shaped crease is rotated by 3-7 degrees (e.g., 5 degrees) with respect to the virtual rotation center 35. In other words, the first arc-shaped crease 31 and the second arc-shaped crease 32 share the starting point on the insertion flap side.

The collar section 13 is provided with a crease 36 corresponding to the first arc-shaped crease 31 and a crease 37 corresponding to the second arc-shaped crease 32 in such a manner that the crease 36 and the crease 37 extend radially in the blank state. Here, when the collar section 13 is folded, the first arc-shaped crease 31 and the crease 36 come to overlap each other, and the second arc-shaped crease 32 and the crease 37 come to overlap each other.

### ~Use Method~

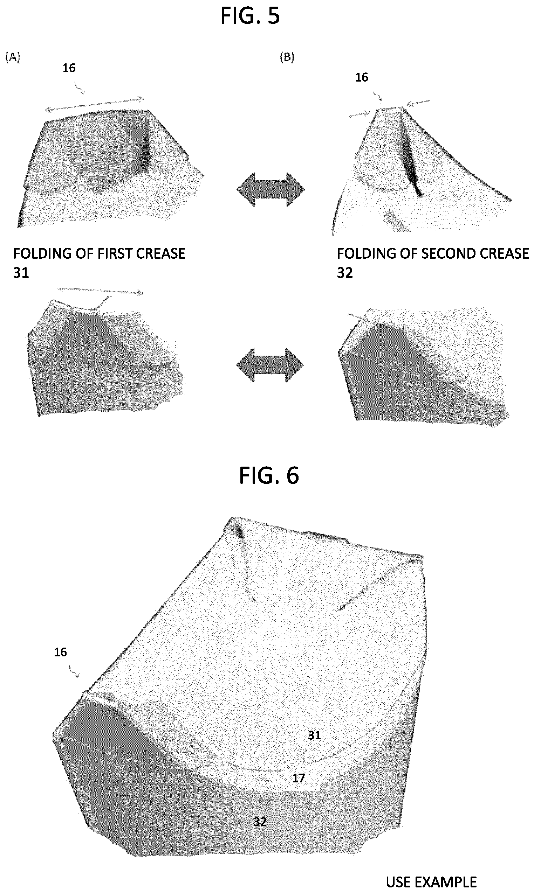

FIG. 5 illustrates a basic action when using. With the afore-mentioned characteristic structure, a width of the tap 16 can be selected.

By folding along the first arc-shaped crease 31 and its corresponding crease 36, a wide tap is formed.

By folding along the second arc-shaped crease 32 and its corresponding crease 37, a narrow tap is formed. Further, an overlapping width of the right and left flaps 11, 12 increases, and the lid function (closing performance) also improves.

At the time, because the first arc-shaped crease 31 and the second arc-shaped crease 32 share the starting point on the insertion flap side, the effect imposed on the insertion flap 14 side is negligible (will be described below in detail).

The paper container 10 according to the present Embodiment has a simple structure, and the selection of the tap width can be readily made by a restaurant staff or a consumer.

For example, when a restaurant staff hands over the paper container containing a drink to a consumer, the restaurant staff selects a narrow tap. This enhances the lid function. The consumer can take out the paper container containing a drink to the outside.

The customer can select a width of the tap 16 depending on his liking. For example, when the customer selects a narrow tap, he can drink, e.g., a hot drink, sparely. Also, there is a case where drinking sparely is preferred for children and/or old men. When the customer selects a wide tap, he can drink, e.g., a cold drink, in one gulp. Also, there is a case where drinking in one gulp is preferred for the youth and the people just finishing the exercise.

FIG. 6 is a Modification Example of the use method. In FIG. 5, the widest tap and the narrowest tap are exemplified. The present Embodiment is not limited thereto but the tap width can be adjusted to any desired width.

When both the first arc-shaped crease 31 and the crease 36 and the second arc-shaped crease 32 and the crease 37 are folded, a connection surface 17 is formed between the first arc-shaped crease 31 and the second arc-shaped crease 32. The way of folding the creases changes the inclination of the connection surface 17. This enables adjustment of the width of the tap 16.

As the connection surface 17 stands closer to a vertical posture, the width comes to be closer to the exemplified widest tap. As the connection surface 17 comes to be closer to a horizontal posture, the width comes to be closer to the exemplified narrowest tap.

### ~Modification Examples of Arc-Shaped Crease~

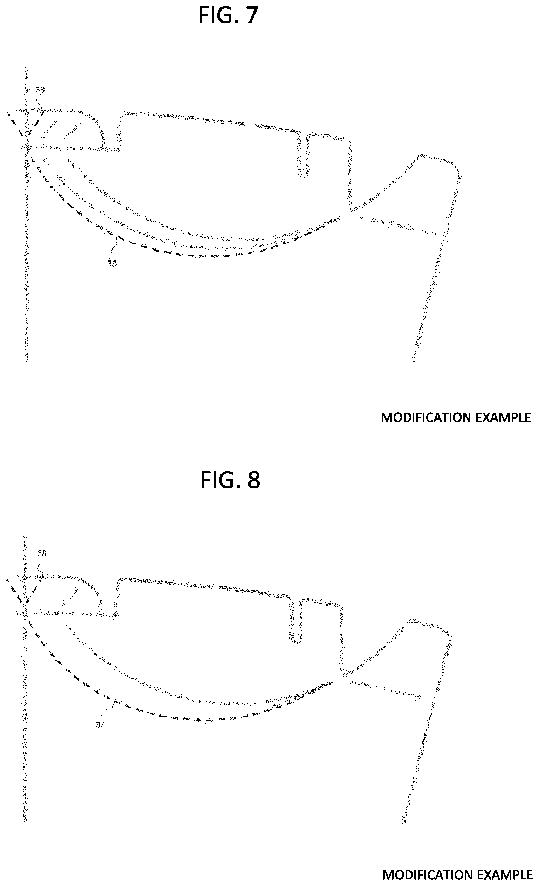

FIG. 7 illustrates a Modification Example of the arc-shaped creases. The above-described Embodiment includes two arc-shaped ceases, i.e., the first arc-shaped crease 31 and the second arc-shaped crease 32, in such a manner that the creases are arranged side by side. Without being limited to this, the number of arc-shaped creases to be arranged collaterally may be three.

In the Modification Example, the third arc-shaped crease 33 is provided at a position where the first arc-shaped crease is rotated by, for example, 10 degrees with respect to the virtual rotation center 35. The collar section 13 is provided with a crease 38 corresponding to the third arc-shaped crease 33 in such a manner that the crease 38 extends radially.

By folding along the third arc-shaped crease 33 and its corresponding crease 38, a closed tap is formed. This provides more enhanced lid function.

FIG. 8 illustrates another Modification Example of the arc-shaped creases. In stead of the second arc-shaped crease 32 and its corresponding crease 37, the third arc-shaped crease 33 and its corresponding crease 38 are provided. By changing the inclination of the connection surface 17, the width of the tap 16 is adjusted.

### ~Summary Of Characteristic Structure 1~

FIG. 9 includes schematic block diagrams illustrating a paper container 100 according to a Comparative Example (having been described above in detail). FIG. 9A is a perspective view when seeing diagonally from the back side. FIG. 9B is a perspective view when seeing diagonally from the front side.

Taking the flexibility of paper into consideration, the Embodiment of the present application applies the Characteristic Structure 1 (providing the arc-shaped creases 31, 32 side by side) to the paper container 100 of the Comparative Example. As a result, the effect can be produced in adjusting the tap width and improving the lid function in comparison with the Comparative Example. According to the circumstances, the tap width can be readily selected and adjusted, and thus the convenience improves.

Similar to the Comparative Example, the Embodiment of the present application has a simple structure which realizes easy assembling.

### ~Characteristic Structure 2~

In the Embodiment of the present application, a case where the Characteristic Structure 2 is applied to the Comparative Example and the effect produced thereby will be described below in comparison with the Comparative Example.

The upper illustration of FIG. 10 shows a comparison of the main portions of the blanks (A: Comparative Example, B: present Embodiment). The lower illustration of FIG. 10 shows a comparison of the inserting structure.

### Initially, the presence or absence of the slit width will be described below.

In the Comparative Example, a slit 126 provided in each of the right and left flaps 111, 112 has no width. In other words, the slit 126 is just a cutting line.

Compared with this, in the present Embodiment, the slit 26 provided in each of the right and left flaps 11, 12 has a width (e.g., 1-3 mm) more than the thickness of the insertion flap 14.

In the Comparative Example, the flexibility of paper is utilized to cause the vicinity of the slit 126 to be deformed, thereby forming a space into which the insertion flap 114 is to be inserted. This insertion structure works well with the linear slit.

In the present Embodiment, by folding along the second arc-shaped crease 32 and its corresponding cease 37, the overlapping width of the right and left flaps 11, 12 increases. At the time, because the first arc-shaped crease 31 and the second arc-shaped crease 32 share the starting point on the insertion flap side, the effect imposed on the insertion flap 14 side is negligible. Here, a microrotation of the right and left flaps 11, 12 causes the linear slit 26 to be slightly deformed into L-shape.

At the time, if the slit 26 does not have a satisfactory width, it becomes difficult for the insertion flap 14 to be inserted into the slit 26. In the present Embodiment, by widening the width of the slit 26, the slit has a play. This play contributes to easy insertion of the insertion flap 14 even when the slit 26 is deformed into L-shape.

Secondary, the presence or absence of a notch will be described below.

In the Comparative Example, each one of the right and left flaps 111, 112 and the insertion flap 114 are coupled together via a connection part 127. The connection part 127 is formed into a triangle-shape enclosed by the end side of each one of the right and left flaps 111, 112, the end side of the insertion flap 114, and the outer rim of the blank.

Compered with this, in the present Embodiment, a notch 27 is provided between each one of the right and left flaps 11, 12 and the insertion flap 14.

In the Comparative Example, the elasticity of paper is utilized for causing the connection part 127 to serve as a spring. When the insertion flap 114 is inserted into the linear slit 126, due to the pressure applied by the spring, the insertion flap 114 is securely brought into engagement with the right and left flaps 111, 112.

Compared with this, in the present Embodiment, the slit 26 has a width (play). For this reason, when the spring force imposed by the connection part is too strong, the insertion flap 14 tends to drop. In the present Embodiment, because the notch 27 is provided, the spring force is controlled. Also, the slit 26 is positioned closer to the insertion flap side in comparison with the linear slit 126, thereby securing the satisfactory insertion length of the insertion flap 14 (e.g., 1/4 of the length of the insertion flap 14). With the structure, the insertion flap 14 hardly drops without depending on the spring force.

In the Comparative Example, since the spring force is too strong, a power was needed to insert the insertion flap 114 into the linear slit 126. Compared with this, in the present Embodiment, since the spring force is controlled, the insertion flap 14 can be inserted into the slit 26 with ease.

As described above, in comparison with the Comparative Example, the present Embodiment has an easily insertable and hardly disconnectable insertion structure. Here, even when the tap width is adjusted, the same effect is produced.

### ~Characteristic Structure 3~

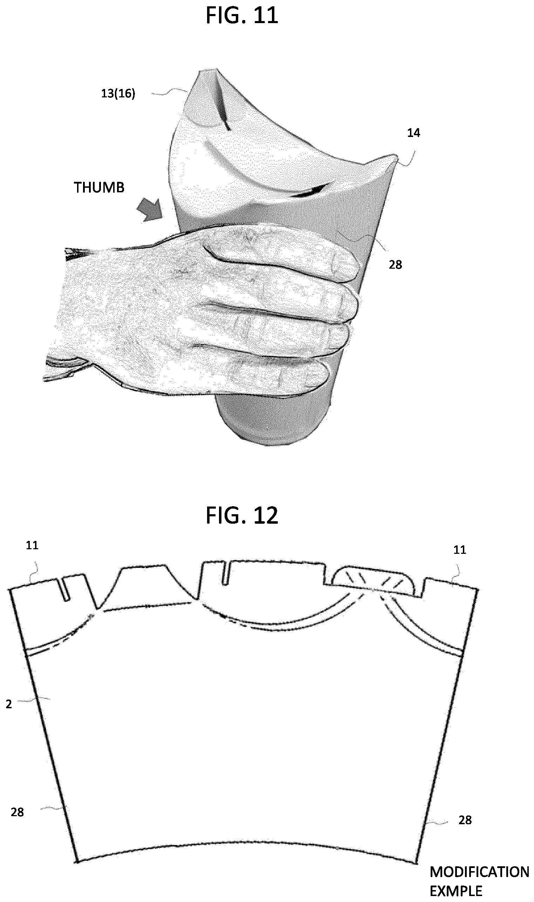

In the present Embodiment, there is a joint part 28 of the body section 2 on the insertion flap side. FIG. 11 illustrates an effect of the body section joint part 28.

The tap 16 is seen in the back side of FIG. 11. When the consumer holds the paper container 10 to drink beverage, the thumb is positioned in the vicinity of the collar section 13. The collar section 13 is formed by being folded. Therefore, it has the higher rigidity than the other sections.

Four fingers other than the thumb are positioned along the body section joint part 28. The body section joint part 28 also has the higher rigidity than the other sections.

If the container is poor in rigidity, it is afraid that the container might be deformed largely, and the contained beverage might be popped out when the consumer holds the container.

In the present Embodiment, owing to the above-mentioned parts having high rigidity, deformation of the container when it is held can be controlled.

Here, in a case where the container has satisfactory rigidity, the above-described limitation is not necessary. FIG. 12 illustrates a developed blank of, for example, a body section according to a Modification Example. In the Modification Example, there is the joint part 28 of the body section 2 on the right flap side.

### ~Characteristic Structure 4~

Referring back to FIG. 2, explanation of the blank will follow. In the present Embodiment, the body section 2 and the flaps 11-14 are formed based on a single fan-shaped blank. In other words, the blank of the present Embodiment has substantially the same shape as the typical body section blank. Therefore, the conventional apparatus and the conventional method can be used.

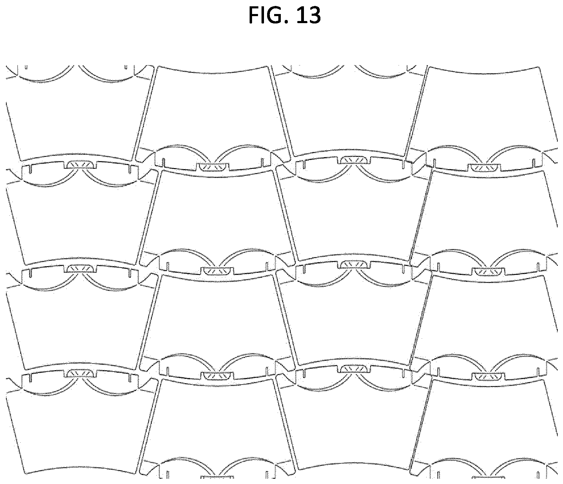

FIG. 13 illustrates an example of alignment of the fan-shaped blanks. Many fan-shaped blanks can be aligned in a single base paper without leaving unwanted space.

Accordingly, the Embodiment of the present application can be realized with ease and in a cost saving manner.

### [REFERENCE CHARACTER LIST]

- 1: bottom section
- 2: body section
- 3: opening
- 10: paper container
- 11: right flap
- 12: left flap
- 13: collar section
- 14: insertion flap
- 16: tap
- 17: connection surface
- 21: crease
- 22: crease
- 26: slit
- 27: notch
- 28: body section joint part
- 30: arc-shaped crease
- 31: first arc-shaped crease (corresponding to a wide opening)
- 32: second arc-shaped crease (corresponding to a narrow opening)
- 33: third arc-shaped crease (corresponding to a closed position)
- 35: virtual rotation center
- 36: crease
- 37: crease
- 38: crease
- 100: paper container (comparative example)
- 111: right flap
- 112: left flap
- 113: collar section
- 114: insertion flap
- 116: tap
- 117: connection surface
- 121: crease
- 122: crease
- 126: slit
- 127: notch
- 128: body section joint part
- 130: arc-shaped crease

## Claims

1. A paper container comprising:
a bottom section (1);
a body section (2) provided to stand along from the bottom section;
a right flap (11) and a left flap (12) formed in such a manner that the right and left flaps (11, 12) are folded inward along creases (30) from the upside of the body section (2);
a collar section (13) formed in such a manner that the collar section (13) is folded outward along a crease (21) from the upside of the body section (2) at one end side of the right and left flaps (11,12); and
an insertion flap (14) formed in such a manner that the insertion flap (14) is folded inward along a crease (22) from the upside of the body section (2) at the other end side of the right and left flaps (11, 12);
wherein the right flap (11) and the left flap (12) overlap each other to cover an opening formed by the body section (2);
wherein the right flap and the left flap each has a slit (26) on the insertion flap side;
wherein the insertion flap (14) is inserted into the slit (26) to maintain the overlapping state of the right and left flaps (11, 12); and
wherein there are collaterally provided between the body section (2) and each one of the right and left flaps (11, 12)
a first arc-shaped crease (31) provided on the flap side, and
a second arc-shaped crease (32) provided on the body section side;
wherein the collar section (13) is provided with
a first crease (36) corresponding to the first arc-shaped crease (31), and
a second crease (37) corresponding to the second arc-shaped crease (32);
wherein
a wide tap (16) can be formed by folding along the first arc-shaped crease (31) and the first crease (36), and
a narrow tap (16) can be formed by folding along the second arc-shaped
crease (32) and the second crease (37).

2. The paper container according to Claim 1, wherein the second arc-shaped crease (32) is provided at a position where the first arc-shaped crease (31) is rotated by 3-7 degrees with respect to a virtual rotation center in the vicinity of the end of the crease of the insertion flap.

3. The paper container according to any one of Claims 1 or 2, wherein the right and left flaps (11, 12), the collar section (13), and the insertion flap (14) are aligned such that the outer rims thereof are on the same circular arc in a blank state.

4. The paper container according to any one of Claims 1 to 3, wherein the slit (26) has a width more than the thickness of the insertion flap (14).

5. The paper container according to any one of Claims 1 to 4, wherein a notch (27) is provided between the insertion flap (14) and each one of the right and left flaps (11, 12).

6. The paper container according to any one of Claims 1 to 5, wherein the body section (2) has a joint part on the insertion flap side.

7. The paper container according to any one of Claims 1 to 6, wherein the width of the tap (16) can further be selected to be an adjustable tap width, wherein
a connection surface (17) is formed between the first arc-shaped crease (31) and the second arc-shaped crease (32) by folding the first arc-shaped crease (31) and the first crease (36) and the second arc-shaped crease (32) and the second crease (37).

8. The paper container according to Claim 7, wherein an inclination of the connection surface (17) can be changed by the way of folding the creases.

9. A method for using the paper container according to Claim 1, wherein selection is made whether
folding is performed along the first arc-shaped crease (31) to form a wide tap (16), or
folding is performed along the second arc-shaped crease (32) to form a narrow tap (16).

## Patentansprüche

1. Papierbehälter, der aufweist:
einen Bodenabschnitt (1);
einen Körperabschnitt (2), der so vorgesehen ist, dass er der Länge nach vom Bodenabschnitt steht;
eine rechte Klappe (11) und eine linke Klappe (12), die so ausgebildet sind, dass die rechte und die linke Klappe (11, 12) entlang von Falten (30) von der Oberseite des Körperabschnitts (2) nach innen gefaltet sind;
ein Kragenabschnitt (13), der so ausgebildet ist, dass der Kragenabschnitt (13) entlang einer Falte (21) von der Oberseite des Körperabschnitts (2) an einer Endseite der rechten und linken Klappen (11, 12) nach außen gefaltet ist; und
eine Einsteckklappe (14), die so ausgebildet ist, dass die Einsteckklappe (14) entlang einer Falte (22) von der Oberseite des Körperabschnitts (2) an der anderen Endseite der rechten und linken Klappen (11, 12) nach innen gefaltet ist;
wobei die rechte Klappe (11) und die linke Klappe (12) einander überlappen, um eine durch den Körperabschnitt (2) gebildete Öffnung abzudecken;
wobei die rechte Klappe und die linke Klappe jeweils einen Schlitz (26) auf der Einsteckklappenseite aufweisen;
wobei die Einsteckklappe (14) in den Schlitz (26) eingeführt wird, um den Überlappungszustand der rechten und linken Klappe (11, 12) aufrechtzuerhalten; und
wobei zwischen dem Körperabschnitt (2) und jeweils der rechten und linken Klappe (11, 12) vorgesehen sind:
eine erste bogenförmige Falte (31), die auf der Klappenseite vorgesehen ist, und
eine zweite bogenförmige Falte (32), die auf der Seite des Rumpfabschnitts vorgesehen ist;
wobei der Kragenabschnitt (13) versehen ist mit:
einer ersten Falte (36), die der ersten bogenförmigen Falte (31) entspricht, und
einer zweiten Falte (37), die der zweiten bogenförmigen Falte (32) entspricht;
wobei
ein breiter Ausguss (16) durch Falten entlang der ersten bogenförmigen Falte (31) und der ersten Falte (36) gebildet werden kann und
ein schmaler Ausguss (16) durch Falten entlang der zweiten bogenförmigen Falte (32) und der zweiten Falte (37) gebildet werden kann.

2. Papierbehälter nach Anspruch 1, wobei die zweite bogenförmige Falte (32) an einer Position vorgesehen ist, an der die erste bogenförmige Falte (31) um 3 bis 7 Grad in Bezug auf ein virtuelles Rotationszentrum in der Nähe des Endes der Falte der Einsteckklappe gedreht ist.

3. Papierbehälter nach einem der Ansprüche 1 oder 2, wobei die rechte und die linke Klappe (11, 12), der Kragenabschnitt (13) und die Einsteckklappe (14) so ausgerichtet sind, dass sich ihre Außenränder im unfertigen Zustand auf demselben Kreisbogen befinden.

4. Papierbehälter nach einem der Ansprüche 1 bis 3, wobei der Schlitz (26) eine Breite aufweist, die größer ist als die Dicke der Einsteckklappe (14).

5. Papierbehälter nach einem der Ansprüche 1 bis 4, wobei eine Kerbe (27) zwischen der Einsteckklappe (14) und jeder der rechten und der linken Klappe (11, 12) vorgesehen ist.

6. Papierbehälter nach einem der Ansprüche 1 bis 5, wobei der Körperabschnitt (2) auf der Einsteckklappenseite einen Verbindungsteil aufweist.

7. Papierbehälter nach einem der Ansprüche 1 bis 6, wobei die Breite des Ausgusses (16) ferner so gewählt werden kann, dass sie eine einstellbare Ausgussbreite ist, wobei eine Verbindungsfläche (17) zwischen der ersten bogenförmigen Falte (31) und der zweiten bogenförmigen Falte (32) durch Falten der ersten bogenförmigen Falte (31) und der ersten Falte (36) und der zweiten bogenförmigen Falte (32) und der zweiten Falte (37) gebildet wird.

8. Papierbehälter nach Anspruch 7, wobei eine Neigung der Verbindungsfläche (17) durch Falten der Falten verändert werden kann.

9. Verfahren zur Verwendung des Papierbehälters nach Anspruch 1, wobei ausgewählt wird, ob
entlang der ersten bogenförmigen Falte (31) gefaltet wird, um einen breiten Ausguss (16) zu bilden, oder
entlang der zweiten bogenförmigen Falte (32) gefaltet wird, um einen schmalen Ausguss (16) zu bilden.

## Revendications

1. Récipient en papier, comprenant :
une section inférieure (1) ;
une section de corps (2) prévue pour être dressée à partir de la section inférieure ;
un rabat droit (11) et un rabat gauche (12) formés de telle manière que lesdits rabats droit et gauche (11, 12) sont repliés vers l'intérieur sur des plis (30) en haut de la section de corps (2) ;
une partie de col (13) formée de telle manière que ladite partie de col (13) est pliée vers l'extérieur sur un pli (21) depuis le haut de la partie de corps (2) à une extrémité des rabats droit et gauche (11, 12) ; et
un rabat d'insertion (14) formé de telle manière que ledit rabat d'insertion (14) est plié vers l'intérieur sur un pli (22) depuis le haut de la partie de corps (2) à l'autre extrémité des rabats droit et gauche (11, 12) ;
où le rabat droit (11) et le rabat gauche (12) se chevauchent pour couvrir une ouverture formée par la partie de corps (2) ;
où le rabat droit et le rabat gauche présentent chacun une fente (26) du côté du rabat d'insertion ;
où le rabat d'insertion (14) est inséré dans la fente (26) pour maintenir le chevauchement des rabats droit et gauche (11, 12) ; et
où sont prévus de manière collatérale entre la partie de corps (2) et chacun des rabats droit et gauche (11, 12) :
un premier pli en forme d'arc (31) prévu du côté du rabat, et
un deuxième pli en forme d'arc (32) prévu du côté de la partie de corps ;
où la partie de col (13) est pourvue :
d'un premier pli (36) correspondant au premier pli en forme d'arc (31), et
d'un deuxième pli (37) correspondant au deuxième pli en forme d'arc (32) ;
où
une ouverture large (16) peut être formée par rabattement sur le premier pli en forme d'arc (31) et le premier pli (36), et
une ouverture étroite (16) peut être formée par rabattement sur le deuxième pli en forme d'arc (32) et le deuxième pli (37).

2. Récipient en papier selon la revendication 1, où le deuxième pli en forme d'arc (32) est prévu à un emplacement où le premier pli en forme d'arc (31) est tourné de 3 à 7 degrés par rapport à un centre de rotation virtuel à proximité de l'extrémité du pli du rabat d'insertion.

3. Récipient en papier selon la revendication 1 ou la revendication 2, où les rabats droit et gauche (11, 12), la section de col (13) et le rabat d'insertion (14) sont alignés de telle manière que leurs bords extérieurs se trouvent sur le même arc de cercle à l'état d'ébauche.

4. Récipient en papier selon l'une des revendications 1 à 3, où la fente (26) a une largeur supérieure à l'épaisseur du rabat d'insertion (14).

5. Récipient en papier selon l'une des revendications 1 à 4, où une encoche (27) est prévue entre le rabat d'insertion (14) et chacun des rabats droit et gauche (11, 12).

6. Récipient en papier selon l'une des revendications 1 à 5, où la section de corps (2) comporte une partie de jonction du côté du rabat d'insertion.

7. Récipient en papier selon l'une des revendications 1 à 6, où la largeur de l'ouverture (16) peut en outre être choisie de manière à être une largeur d'ouverture réglable, où une surface de raccord (17) est formée entre le premier pli en forme d'arc (31) et le deuxième pli en forme d'arc (32) en pliant le premier pli en forme d'arc (31) et le premier pli (36), et le deuxième pli en forme d'arc (32) et le deuxième pli (37).

8. Récipient en papier selon la revendication 7, où l'inclinaison de la surface de raccord (17) peut être modifiée par pliage des plis.

9. Procédé d'utilisation du récipient en papier selon la revendication 1, où il est sélectionné si
le pliage est effectué sur le premier pli en forme d'arc (31) pour former une ouverture large (16), ou
le pliage est effectué sur le deuxième pli en forme d'arc (32) pour former une ouverture étroite (16).
